# EUROPEAN PATENT APPLICATION

(11) **EP 2 908 037 A1**
(43) Date of publication of application: **19.08.2015**
(21) Application number: 15155289.0
(22) Date of filing: 16.02.2015
(51) Int. Cl.: F16L 1/12

(54) **A rock mattress**

(30) Priority: 14.02.2014 GB 201402674
(71) Applicant: Pipeshield International Ltd, Lowestoft, Suffolk NR32 2HD (GB)
(72) Inventor: KEEL, Peter, Lowestoft, Suffolk NR32 2HD (GB); HOWLETT, Steve, Lowestoft, Suffolk NR32 2HD (GB); WANKOWSKI, John, Lowestoft, Suffolk NR32 2HD (GB)
(74) Representative: ip21 Ltd

(57) **Abstract**

A subsea mattress (10) comprising a base region (11) substantially square or rectangular in shape;
four side walls (12a-12d) to define with the base (11) an internal open volume, each side wall (12a-12d) connected to and extending perpendicularly from an edge (14a-14d) of the base region (11) and also to the adjacent side walls (12a-12d) having a net structure;
a lid (13) connected along a first edge (14a) to a free edge of a side wall and securable to the free edge (14b-14d) of each of the other side walls (12b-12d);
one or more reinforcing strops (15) extending across and attached to the base region (11);
lifting means (16) to enable a loaded mattress to be manoeuvred into position.

## Description

### Field of the Invention

The present invention relates to a mattress for use in protecting subsea structures. The mattress is used for example either to lay over the subsea structure, to prevent scouring around said structure or provide support therefor.

### Background to the Invention

The requirement to protect subsea structures from damage due to tidal or current flow is well known. The water can carry solid material of sufficient mass to abrade or otherwise damage structures or can erode the seabed around the structure (a process known as scouring) removing thereby, support. In addition protection from falling objects is often needed. For example many structures on the seabed lie directly beneath an oil platform, installation site for wind turbines etc.

Around the shoreline, gabions are often used to protect softer soil or rocks from the action of the sea. The gabions present a relatively solid barrier and absorb the majority of energy contained in a wave. However these are unsuitable for subsea environments of the type contemplated herein. Firstly, the wire cage material which gives the gabion its shape corrodes and is expensive to replace. Secondly the solid surface presented by the gabion to the current causes sub-currents around the gabion which can cause scouring and cause the gabion to shift or change its shape.

A variation on the theme of the gabion is provided in US 6305876 and also in EP 2348215, EP 2341592 and EP 2354535. In these patents, flexible net bags containing rocks or other filler material, are disclosed, which can be used to level ground, protect pipelines and support the foundations of wind turbines. The bag typically has a single narrow opening which allows the filler to be loaded into the bag, and the loaded bag is then lowered into position by means of a single suspension rope.

The above bags however have a number of disadvantages. Firstly the bags have a single suspension point which means that the suspension point needs to be strong enough to bear all the weight of the bag and the filler. Second, the net material from which the bags are formed is required to be sufficiently strong to prevent the material from being ripped by the weight and shape of the rocks within the bag. Third, the bags have no defined shape and will take shape due mainly to gravity and any structure /terrain on which they lie.

It should be noted that the references herein to 'subsea' should include both marine and fluvial environments.

It is an object of the current invention to provide a mattress to address the above problems. It is a further object of the invention to provide a method of forming a mattress.

### Summary of the Invention

According to a first aspect of the invention there is provided a subsea mattress, comprising a base region substantially square or rectangular in shape;
four side walls, to define with the base an internal open volume, each side wall connected to and extending perpendicularly from a separate edge of the base region, and also to the adjacent side walls having a net structure;
a lid, connected along a first edge to a free edge of a side wall and securable to the free edge of each of the other side walls;
one or more reinforcing strops extending across and attached to the base region;
lifting means to enable a loaded mattress to be manoeuvred into position.

The mattress can be more accurately put in position and provides broad protection for a structure and potentially is of greater longevity and reliability.

Preferably, the mattress comprises a plurality of parallel strops extending across the base region, and further preferably said strops extend up and are attached to opposed side walls of the mattress. Yet further preferably a central reinforcing strop, runs perpendicularly to and is fixed to each of the parallel strops, across the base region to provide additional strengthening to the mattress, and preventing the individual lifting straps from separating from each other. This limits the load exerted by the mattress contents onto the mesh material of the base region.

Optionally, the base region is formed from material having a net structure, to allow water to exit the mattress through the base region.

Preferably, the lid is secured to the free edges of the side walls of the mattress by means of a rope which sews these elements together. Alternatively a plurality of ties secures the lid to the free edges of the side walls. Ties have an advantage of being relatively quick to install and if a tie is damaged only that one would need to be replaced rather than an entire rope.

Advantageously, the mattress comprises a further lid or lids which close over the top of the mattress to maintain the mattress in a securely closed position.

Optionally, the mesh of the net is formed of a range of yarn, sizes and mesh apertures to achieve the minimum strength safe working load per square metre. Preferably the fabric of the mesh has a porosity of from 45-90% to enable water to flow through the mesh and into the rocks or filler within the mattress.

Optionally, a mattress includes a flexible layer such as a rubber sheet or matting to overlay the base region and on which filler rests. The flexible layer protects a structure beneath the mattress and provides; cushioning against dynamic impacts on the mattress, load spreading over the structure and moreover increases the co-efficient of friction between the mattress and the structure to reduce movement of the mattress. This feature is of especial advantage in rock mattresses of the present invention, as the mattresses are more readily accurately placed than prior art bags.

### Brief Description of the Drawings

The invention is now described with the reference to the accompanying drawings which show, by way of example only, two embodiments of a mattress. In the drawings:
Figure 1 is a perspective view of a first embodiment of a mattress;

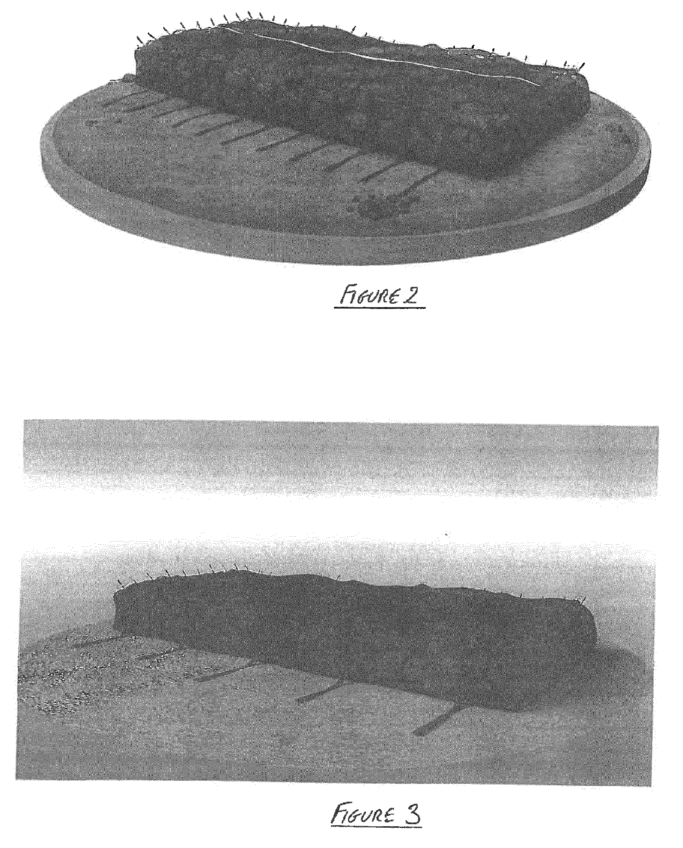

Figure 2 is an image of the mattress of Figure 1 located on a sea or riverbed; and
Figure 3 is an image of a second embodiment of a mattress located on a sea or riverbed.

### Detailed Description of the Invention

Due to currents and tidal effects it is usually necessary to protect structures which are located and/or anchored to the seabed. Although there is usually bedrock beneath the surface of the bed, the layer of mud and silt above the bedrock can often be unstable and easily washed away - often referred to as 'scouring'. This causes a problem for pipelines, cables and the like which rest on the seabed as the shifting of position of the seabed can cause tension within the pipeline. Moreover, the position of a - usually rigid - structure on or about the seabed often causes localised more intense currents which can exacerbate the removal of the mud.

The use of mattresses to protect or support structures in subsea environments is known in the art. However, care needs to be taken as the mattresses themselves can increase scouring. For example mattresses comprising concrete blocks, flexibly linked together to cover a subsea structure such as a pipeline are available. Also known are net or mesh bags, containing loose rock or rubble which can be lowered by means of a support on the bag into position. The contents of the bag are such that the bag does not present a solid surface to a current and thus dissipates the current's energy rather than diverting it. Such bags are useable in a number of functions, such as covering over a structure on the seabed (for example pipeline or cable), levelling off the seabed to enable structures to be laid on top of them, adding support to structures as well as preventing scouring.

However, previously unidentified problems exist within these types of bags. For example, in order to cover or protect a large area then a large number of bags will need to be used. This deficiency is not correctable simply by increasing the size of the bag, as the design would not allow this. Support would need to be considerably strengthened as would that of the mesh from which the bag is made.

An alternative method of protection is to place loose rocks in the desired location (known as 'rock dumping'). This method relies upon the top layer of rocks being of sufficient size that the top rocks will not be moved by the flow of the water.

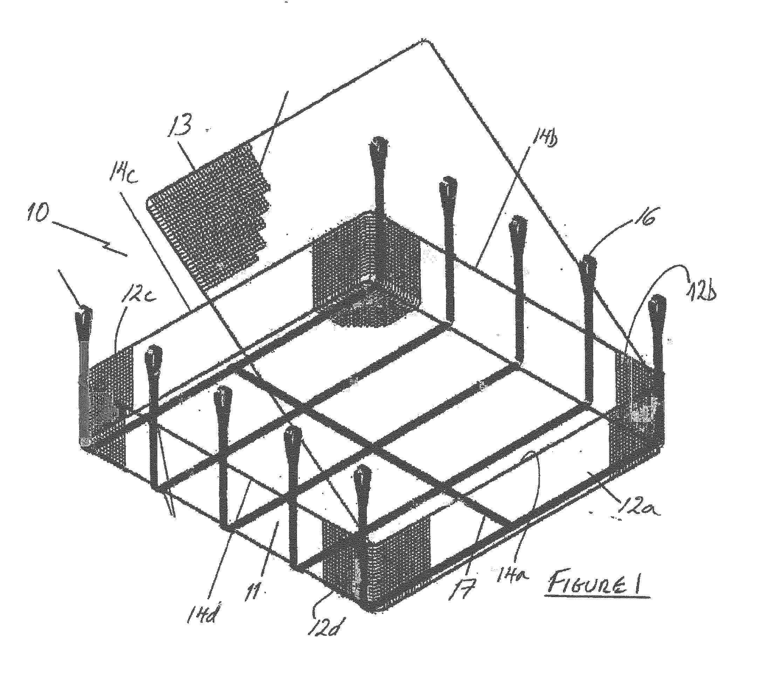

The present invention addresses these problems by means of mattresses shown in the accompanying figures. Turning initially to Figure 1, this shows a mattress in accordance with the first embodiment of the invention. For clarity the filler material is not shown in Figure 1.

In Figure 1 a mattress body, generally referenced 10 has a substantially rectangular cuboidal shape, with an internal volume to receive filler material such as rocks, rubble, the internal volume defined by a base 11 and four walls 12a to 12d. A retractable lid panel 13 is joined along one edge 14a to the wall 12a. The base 11, walls 12a to 12d and lid panel 13 are typically woven from a rope into a mesh material which allows water to flow into through and out of the rock mattress. However, one or more of the base, wall, or lid panel can be formed having a more continuous surface when required. To ensure that the mesh does not unravel, the free edge of each side wall 12a to 12d includes an edge rope to which the final loose ends of the mesh are attached.

The rope of the mesh can be formed of a plastics material such as a polyalkylidene, for example, polyethylene, polypropylene or of a polyacrylate, polyvinylchloride, polyamide, polyimide, etc. Alternatively natural fibres can be used.

A typical mesh material is polyamide 6 (Nylon) having a 4mm twine and a mesh size of 25mm x 25mm. But different size meshes could be utilized to take advantage of availability of local materials to use as fill. Stabiliser can be included within the twine to give the twine ultra-violet and heat resistance. The fabric of the mesh net structure preferably has a porosity of from 45-90%

In order to strengthen the rock-mattress body 10, especially when the mattress is moved from one location to another, a number of strops 15 extend across the base 11 and walls 12a to 12d. Usually these are fixed to the outside of the rock-mattress body 10 to minimise abrasion from the rock filler. Because of the shape of the rock mattress body 10, the strops 15 are attached to a flat-surface which increases the ability to secure the strops 15 in position. This is in contrast to prior art bags where any strop would need to be fixed to a curved surface. The strops 15 are made of, for example, a nylon webbing material and can be fixed on using methods known in the art such as thermal melting, adhesive or by sewing. Each end of a strop 15 is formed into a loop 16 to enable the rock mattress to be lifted between locations. Although in Figure 1, each of the strops 15 extending from a particular side is shown as having a loop 16 this need not be the case, as long as sufficient loops 16 are present to enable the mass of the load to be borne.

In addition to the strops 15, a central stabilising and reinforcing strop 17 runs across the inner surface of the base 11, intercepting each of the strops 15. The strop 17 is secured, through the base 11 to said strops 15. Strops 15, 17 combine together to strengthen the mattress body 10 during transport and also during in-use conditions, as the strop 17 acts to prevent the strops 15 from separating from one another.

To allow the strop 15 some freedom of movement and to reduce the risk of tearing the material of the mattress body 10, the strops are only loosely attached by a rope loop to the edges 14b, 14d of the side walls, 12b, 12d. The loop allows an up and down motion relative to the mesh, but prevents a side to side motion or a pulling away from the mesh. Securing to the edges 14b, 14d is typically accomplished through the use of edge ropes of the side walls 12b, 12d.

The lid panel 13 is also formed of a mesh material which has a mesh of the same dimensions as the walls 12a to 12d and the base 11. When the lid panel 13 is to be closed, following addition of the filler rocks into the mattress body10, the lid panel 13 is drawn across the open face of the mattress body space 10 so that the edges of the lid panel 13 on the edges of the side walls 14b to 14d are approximately coincident. A rope is then used to sew the edges of the lid panel 13 and side walls 14b to 14d together. The rope comprising, for example, a 6mm braided nylon yarn, is sewn through the meshes of these elements to provide a secure fixing. Additionally or alternatively a plurality of ties is used to secure the lid panel to the side walls 14b to 14d.

Additional lid panels, not illustrated, can also be drawn into position and secured to strengthen the rock mattress. Once the filler has been introduced because of the nature of the fixture of the side walls 14a to 14d to the base 11, by means of a seam and the strops 15, the rock mattress maintains effectively its initially formed shape. The mesh material does however impart sufficient flexibility to the rock mattress to enable it to adjust to the irregular contour of a seabed or over a man-made subsea structure. Moreover, because the rocks within the mattress are distributed evenly throughout the volume, and the flexing of the rock mattress is limited, an even spread of mass is achieved which assists in optimised load application. Additionally, the rock mattress of the current invention can deliver more accurate linear coverage and protection on a like-for-like basis than bulk rock-dump or rock bags with a similar weight or volume of material placed.

The rectangular /square shape of the mattress has a larger footprint than the prior art circular bags to give greater efficiency of coverage. Moreover, the shape allows tessellation of mattresses without leaving gaps as is the case with circular bags. A more homogenous structure can therefore be formed.

When building aquatic anti-scour structures, there is an important relationship between the size, density and shape of the individual building blocks, the voids between the building blocks, and the resulting stability and resilience of the structure. It is important that the voids are large enough for water to move through, but small and irregular enough to lower the speed of the water such that any particles carried in the current will fall out of suspension and allow silting to occur which will aid the long term stability of the structure. If the voids are too big, the speed of the water flowing over and through the building blocks will not reduce and the water will not deposit any particles, but on the contrary will pick particles up causing localised scouring. The stones inside the mattress are the building blocks. The mesh prevents the current moving the blocks, but at the same time is highly porous. Large gaps between adjacent units (i.e. adjacent mattresses or adjacent rock bags, will be points where localised scouring can occur.

A mattress of the current invention can be mobilised on conventional diving support vessels with other project materials and can be stacked unlike other bag types. Also, specialist bulk rock-dump vessels are not required.

Within the scope of the above described invention, rock mattresses of size from 2.5m to 10m in length can be produced. As examples, mattresses of dimensions 2.5m x 2.5m x 0.5m, 6.5m x 2.5m x 0.5m, and having laden masses of 5.9 Tonnes and 14.3 Tonnes respectively can be exemplified.

In a further embodiment of the invention (not illustrated), the lid of the mattress comprises two portions, attached along opposed side walls of the mattress which meet along a centre line of the mattress. In use therefore, to close the lid, the lid portions are sewn to the side walls and also to each other along the centre line.

In order to produce a filled rock mattress a mould (not illustrated) is most easily utilised. The mould can be formed of metal, wood or other suitable materials known in the art. The mould has the same dimensions as those required of the mattress. The empty mattress body is placed in the mould, with the side walls in the upright position and secured to ensure the side walls do not fall into the inner volume of the mattress and so become covered during filling. The inner volume is then filled with the rocks in an even fashion. The rocks contribute to the ability of the rock mattress to maintain its form during transportation and use.

Once filling is complete, the lid can then be sewn over the rocks and the rock mattress moved from the mould. The rock mattress can be lifted by means of the loops at the end of the strops. The provision of a plurality of loops both improves the safety, as in the event of one loop breaking the remaining loops can support the weight. Also, the weight is distributed across multiple loops and so strain on an individual loop is reduced, which means that a loop should last longer and can also be made to a lower specification without impairing quality or performance. Alternatively, the edge of the lid can be secured to the side walls by means of ties commonly used in the art.

## Claims

1. A subsea mattress (10) comprising a base (11) substantially square or rectangular in shape;
four side walls (12a-12d) to define with the base (11) an internal open volume, each side wall (12a-12d) connected to and extending perpendicularly from an edge (14a-14d) of the base (11) and also to the adjacent side walls (12a-12d) having a net structure;
a lid (13) connected along a first edge (14a) to a free edge of a side wall and securable to the free edge (14b-14d) of each of the other side walls (12b-12d);
one or more reinforcing strops (15) extending across and attached to the base (11);
lifting means (16) to enable a loaded mattress to be manoeuvred into position.

2. A mattress according to claim 1, the mattress comprising a plurality of parallel strops extending across the base.

3. A mattress according to claim 2, wherein said strops extend up and are attached to opposed side walls of the mattress.

4. A mattress according to claim 3 wherein a central reinforcing strop (17) runs perpendicularly to and is fixed to each of the parallel strops, across the base (11) to provide additional strengthening to the mattress, and preventing the individual lifting straps from separating from each other.

5. A mattress according to any preceding claim wherein the base is formed from material having a net structure.

6. A mattress according to any preceding claim, wherein the lid is secured to the free edges of the side walls of the mattress by means of a rope which sews these elements together.

7. A mattress according to any preceding claim wherein a plurality of ties secures the lid to the free edges of the side walls.

8. A mattress according to any preceding claim wherein, the mattress comprises a further lid or lids which close over the top of the mattress.

9. A mattress according to any preceding claim, wherein the fabric of the net structure has a porosity of from 45-90%.

10. A mattress according to any preceding claim, wherein the mattress includes a flexible layer such as a rubber sheet or matting to overlay the base and on which filler rests.
